# EUROPÄISCHE PATENTSCHRIFT

(11) **EP 2 277 082 B1**
(45) Veröffentlichungstag und Bekanntmachung des Hinweises auf die Patenterteilung: **21.02.2018**
(21) Anmeldenummer: 08874181.4
(22) Anmeldetag: 02.12.2008
(51) Int. Cl.: G01C 11/00, G01B 11/25, H04N 9/31, G03B 21/00

(54) **PROJEKTIONSMITTEL UMFASSENDE VORRICHTUNG**
DEVICE COMPRISING PROJECTION MEANS
DISPOSITIF COMPRENANT UN MOYEN DE PROJECTION

(30) Priorität: 07.05.2008 DE 102008001629
(43) Veröffentlichungstag der Anmeldung: 26.01.2011
(73) Patentinhaber: Robert Bosch GmbH, 70442 Stuttgart (DE)
(72) Erfinder: NIEHSEN, Wolfgang, 31162 Bad Salzdetfurth (DE); SIMON, Stephan, 31079 Sibbesse (DE)
(86) Internationale Anmeldenummer: PCT/EP2008/066569
(87) Internationale Veröffentlichungsnummer: WO 2009/135546

(56) Entgegenhaltungen:
- WO-A-00/21024
- AT-B- 410 847
- DE-A1-102005 039 703
- JP-A- 2005 180 555
- US-A- 5 663 885
- US-A1- 2002 052 709
- US-A1- 2004 201 823
- US-B1- 6 731 991

## Beschreibung

### Stand der Technik

Die Erfindung betrifft eine Vorrichtung mit Projektionsmitteln zum Projizieren von Lichtobjekten auf Objekte gemäß dem Oberbegriff des Anspruchs 1.

Bekannt sind sogenannte Kreuzlinienlaservorrichtungen. Diese projizieren horizontale und/oder vertikale Laserlinien auf zweidimensionale oder dreidimensionale Objekte, meist Wände, und erleichtern somit das Ausrichten von Fliesen, Fenstern, Türen, etc.

Ferner sind optische Entfernungsmessvorrichtungen bekannt, die durch interferometrische Methoden oder Laufzeitenmessungen Abstände zwischen der Vorrichtung und einem Objekt bestimmen können.

Des Weiteren sind als Laserprojektoren oder als Beamer ausgebildete Projektoren zum Projizieren von Lichtobjekten auf zweidimensionale oder auf dreidimensionale Objekte bekannt. Beispiele von Vorrichtungen mit Projektionsmitteln finden sich im Stand der Technik u.a. in US2004/201823 A1, US2002/052709, WO00/21024 A, AT 410 847 B, JP 2005 180555 A, US6731991 B1, DE 10 2005 039703 A1 oder US 5663885 A.

### Offenbarung der Erfindung

### Technische Aufgabe

Der Erfindung liegt die Aufgabe zugrunde, eine alternative Vorrichtung nach dem unabhängigen Anspruch 1 vorzuschlagen, mit der Architekten, Innenarchitekten, Handwerker oder Heimwerker bei ihrer täglichen Arbeit, insbesondere in Innenräumen, auf bisher nicht dagewesene Weise unterstützt werden.

### Technische Lösung

Diese Aufgabe wird mit einer Vorrichtung mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, Projektionsmittel zum Projizieren von Lichtobjekten auf zweidimensionale Objekte (insbesondere Wandflächen) oder auf dreidimensionale Objekte (insbesondere einen Raum begrenzende Wandflächenanordnungen) mit geeigneten Sensormitteln und mit Logikmitteln zum Auswerten von mittels der Sensormittel erhaltenen Sensorinformationen in einer gemeinsamen Vorrichtung zu kombinieren. Dabei müssen die Sensormittel derart ausgebildet sein, dass sie die auf das Objekt projizierten, vorzugsweise komplexen, Lichtobjekte, d.h. das von den Projektionsmitteln ausgesendete und wieder reflektierte Licht, großflächig erfassen, insbesondere damit die Logikmittel anhand des erfassten, reflektierten Lichtes Raum- und/oder Abmessungsinformationen ermitteln können. Im Gegensatz zu bekannten Laserentfernungsmessern kann somit nicht nur ein einziger Lichtpunkt erfasst werden, sondern es ist möglich, eine Vielzahl von, insbesondere beabstandeten, Lichtpunkten und/oder komplexe Lichtobjekte, wie Rechtecke, Kreise, Fliesenmuster, etc. zu erfassen. Bevorzugt sind die Sensormittel derart ausgebildet, dass sie zusätzlich zu den auf das Objekt projizierten Lichtobjekten das Objekt selbst, insbesondere in einem Bereich neben den Lichtobjekten, erfassen. Durch die visuelle Erfassung der Lichtobjekte zusammen mit den Projektionsflächen und durch eine geeignete Ausbildung der Logikmittel können aus den von den Sensormitteln erfassten Sensorinformationen für die Bedienperson nützliche Auswerteergebnisse erhalten werden. Bevorzugt sind die Logikmittel dabei derart ausgebildet, dass sie den Unterschied zwischen den detektierten Lichtobjekten und den umliegenden Bereichen der Fläche bzw. der dreidimensionalen Flächenanordnung erkennen und bei der Auswertung berücksichtigen. Besonders bevorzugt wird die Art und/oder Position der Lichtobjekte so gewählt, dass die Lichtobjekte den Logikmitteln bestimmte Auswerteaufgaben erleichtern. Beispielsweise ist es für die Messung der dreidimensionalen Lage einer Raumkante vorteilhaft, eine Linie derart auf die Kante zu projizieren, dass diese die Kante kreuzt und aus der Sicht der Sensormittel an der Kante geknickt ist. Die Logikmittel können dann beispielsweise über die Lage des Knicks die genaue Raumlage der Kante bestimmen. Besonders bevorzugt sind die Logikmittel derart ausgebildet, dass diese, falls Informationen nur lückenhaft mit Hilfe der Sensormittel erfassbar sind, fehlende Informationen, beispielsweise durch Interpolation und/oder Extrapolation selbst ermitteln. Die Vorrichtung kann bei geeigneter Ausbildung, wie später noch erläutert werden wird, den Anwender bei Vermessungs-, Planungs- und Markieraufgaben unterstützen. Die Vorrichtung bietet - je nach Ausbildung der Logikmittel - neue, hilfreiche Möglichkeiten der Vermessung und/oder Unterstützung des Anwenders. Beispielsweise ist es bei entsprechender Ausbildung der Logikmittel möglich, eine Wand oder eine Wandanordnung dreidimensional zu vermessen und Abweichungen von der Planarität zu bestimmen, beispielsweise um in einem Folgeschritt daraus die Höhe von erforderlichen Unterlegungen einer Lattung automatisch zu bestimmen. Besonders bevorzugt sind die Logikmittel derart ausgebildet, dass diese Objektstrukturen in und/oder auf dem Objekt erkennen. Dabei kann es sich bei Objektstrukturen sowohl um zweidimensionale als auch um dreidimensionale Objektstrukturen, beispielsweise um Fliesenanordnungen, Kabelpositionen, Wasserleitungs- oder Gasleitungspositionen, etc. handeln. Bevorzugt sind die Logikmittel ferner derart ausgebildet, dass sie die Position von Objektstrukturen am Objekt ermitteln und/oder Objektstrukturen vermessen können.

Von besonderem Vorteil ist eine Ausführungsform, bei der die Projektionsmittel derart ausgebildet sind, dass die Lichtobjekte in Form von Lichtpunkten und/oder Lichtlinien und/oder Lichtmustern und/oder Lichtschriften und/oder Lichtbildern erzeugt werden können. Je nach Anwendungszweck kann es dabei vorteilhaft sein nur ein einziges Lichtobjekt oder mehrere Lichtobjekte gleichzeitig oder nacheinander auf die Fläche bzw. die dreidimensionale Flächenanordnung zu projizieren.

Von besonderem Vorteil ist eine Ausführungsform der Vorrichtung, bei der die Sensormittel mindestens eine Kamera, vorzugsweise eine Digitalkamera (Kamerachip), umfassen, da mit der Kamera auf einfache Weise nicht nur das reflektierte Licht der Projektionsmittel, sondern auch Flächenbereiche benachbart der Lichtobjekte und somit die Lage der Lichtobjekte auf dem angestrahlten Objekt erfasst werden können. Zum Ermöglichen besonders exakter dreidimensionaler Messungen ist eine Ausführungsform bevorzugt, bei der die Sensormittel mehrere, vorzugsweise winklig zueinander angeordnete Kameras umfassen. Zusätzlich oder alternativ zu mehreren winklig angeordneten Kameras kann auch mindestens oder ausschließlich eine Kamera mit einer Weitwinkeloptik (z.B. Spiegeloptik) eingesetzt werden. Es ist auch eine Ausführungsform mit Analogkamera realisierbar.

Wie eingangs angedeutet, ist eine Ausführungsform der Vorrichtung besonders bevorzugt, bei der die Logikmittel derart ausgebildet sind, dass mit diesen Messungen durchgeführt werden können. Dabei können die Logikmittel derart ausgebildet werden, dass sie das Objekt zumindest abschnittsweise vermessen. Auch ist es möglich, Grenzen (z.B. Kanten) zwischen mehreren Flächen einer Flächenanordnung (dreidimensionales Objekt) zu vermessen. Auch können auf bzw. in der Fläche bzw. der Flächenanordnung angeordnete zweidimensionale oder dreidimensionale Strukturelemente, wie beispielsweise Stromleitungen, Wasserleitungen, Signalleitungen, faseroptische Leitungen, Leerrohre etc. vermessen werden. Besonders bevorzugt ist eine Ausführungsform der Vorrichtung, bei der die Logikmittel derart ausgebildet sind, dass automatisch eine vollständige dreidimensionale Vermessung eines Objektes, vorzugsweise eines Raumes bzw. eines Raumabschnittes, durchgeführt werden kann. Die Vermessung kann beispielsweise auf Basis von Triangulation und/oder Lichtlaufzeitmessung durchgeführt werden. Beispielsweise wird hierzu der Abstand zu mindestens zwei projizierten Lichtobjekten (insbesondere Lichtpunkte) bestimmt und die Strecke zwischen den Lichtobjekten auf Basis von trigonometrischen Funktionen ermittelt. Die Triangulation kann im einfachsten Fall auch mit nur einem einzigen Lichtobjekt ausgeführt werden, wobei der Lichtpunkt, die Lichtquelle (Projektionsmittel) und die Sensormittel (Kamera) ein Dreieck bilden. Durch die starre Verbindung zwischen Sensormittel und Projektionsmitteln, sowie durch den bekannten Winkel, unter dem die Projektionsmittel strahlen, sowie durch den mittels der Sensormittel gemessenen bzw. erfassten Winkel ist eine Triangulation eindeutig.

In Weiterbildung der Erfindung ist mit Vorteil vorgesehen, dass die Logikmittel derart ausgebildet sind, dass mit ihnen die Position der Vorrichtung relativ zu dem Objekt, insbesondere zu bestimmten Objektbereichen, bestimmbar ist. Hierzu können die Logikmittel beispielsweise den Abstand zwischen der Vorrichtung und mindestens einem Objektpunkt bestimmend ausgebildet sein. Besonders bevorzugt ist eine Ausführungsform, bei der die Logikmittel die ermittelten Positionsinformationen bei der Vermessung des Objektes berücksichtigend ausgebildet sind. Dabei kann die Selbstlokalisation der Vorrichtung derart realisiert werden, dass sich die Vorrichtung in einer vorher bekannten Umgebung oder aber auch in einer unbekannten, insbesondere üblichen, Umgebung beispielsweise mit waagerechtem Boden, lokalisiert. Bevorzugt sind die Vorrichtung bzw. die Logikmittel derart ausgebildet, dass die ermittelten Positionsdaten der Vorrichtung im Raum automatisch korrigiert werden, nachdem das Gerät willentlich oder aus Versehen verschoben wurde. Bevorzugt erfolgt die Bestimmung der eigenen Position und der Orientierung im Raum unter Berücksichtigung von Decken und/oder Böden und/oder Wänden und/oder Balken, etc., die von den Logikmitteln beispielsweise als waagerecht oder senkrecht angenommen werden können. Zusätzlich oder alternativ kann die Positionsbestimmung unter Berücksichtigung eines zuvor eingelesenen, elektronischen Plans des Objektes erfolgen.

Von besonderem Vorteil ist eine Ausführungsform der Vorrichtung, bei der die Logikmittel derart ausgebildet sind, dass mit ihnen eine zweidimensionale Karte (2-D-Plan) und/oder ein dreidimensionales Modell (3-D-Plan) des Objektes erstellbar ist. Ein derartiges Modell besteht beispielsweise aus einer Wand mit Fensternischen, zwei rechts und links angrenzenden Wänden, einer oben angrenzenden Decke und einem unten angrenzenden Boden. Besonders vorteilhaft ist diese Funktion, wenn kein Bauplan des Objektes (insbesondere Raum) zur Verfügung steht. Die beschriebene Funktionalität ermöglicht es der Vorrichtung durch eine geeignete Ausbildung der Logikmittel einen derartigen Bauplan anhand von ermittelten Messwerten und gegebenenfalls einer Datenbankunterstützung zu ermitteln, wobei eine derartige, fakultativ vorzusehende Datenbank beispielsweise genormte und/oder bekannte Bauelemente enthält und diese für die zweidimensionale oder dreidimensionale Bauplangenerierung zur Verfügung stellt.

Besonders bevorzugt ist eine Ausführungsform, bei der ein Anwender mit der Vorrichtung in Interaktion treten kann. Mit Vorteil sind die Logikmittel hierzu zum Erkennen und Ausführen von visuellen und/oder akustischen Befehlen ausgebildet, wobei die visuellen Befehle (Kommandos) mit Hilfe der Sensormittel erfasst werden können. Der Anwender steuert die Vorrichtung beispielsweise dadurch, dass er mit Hilfe eines Laserpointers oder einer Taschenlampe Befehle (Signale) erteilt, indem er auf ein von den Sensormitteln beobachtetes Objekt strahlt und dabei beispielsweise Bewegungen vollführt oder Blinkmuster realisiert. Zusätzlich oder alternativ kann der Anwender visuelle Befehle mit der Hand oder mittels eines Zeigestocks anzeigen. Um das eindeutige Erkennen und Lokalisieren der visuellen Befehle zu erleichtern, können auch Hilfsmittel eingesetzt werden, beispielsweise eine von einer Hand geführte Lichtquelle oder ein am Zeigestock befestigter Retro-Reflektor oder sonstige Marker. Bevorzugt kann der Anwender mit der Vorrichtung über die Sensormittel derart in Interaktion treten, dass der Anwender durch eine geeignete Visualisierung der Vorrichtung, insbesondere den Logikmitteln, Lokalisierungsinformationen, beispielsweise in der Form "hier befindet sich ein Stromkabel, hier soll eine erste Befestigungsschraube angeordnet werden" übermittelt. Zusätzlich oder alternativ kann der Anwender durch visuelle Interaktion die "Aufmerksamkeit" der Vorrichtung auf bestimmte Objektabschnitte richten oder, insbesondere in Auswahlmenüs, zwischen Alternativen auswählen. Das visuelle Erteilen von Befehlen kann auf vielfältige Weise ausgenutzt werden. Beispielsweise zeigt der Anwender in einem Zimmer im Rohbauzustand mit einem Laserpointer auf elektrische Leitungen, die auf einem Objekt (Wand oder in Wandschlitzen) verlegt sind. Dieses Deuten nimmt die Vorrichtung bzw. nehmen die Logikmittel bevorzugt zum Anlass, Leitungen zu vermessen und deren Lage genau zu bestimmen.

Zusätzlich oder alternativ zu einer visuellen oder akustischen Einflussnahme auf die Vorrichtung ist es möglich, die Vorrichtung mit geeigneten Eingabeelementen, wie Tasten, Schaltern, Drehknöpfen, Schiebern, Touch-Screen, oder Schnittstellen zu einer externen Eingabemöglichkeit, wie einem Laptop, einem Handy oder einem PDA, auszustatten.

Von besonderem Vorteil ist eine Ausführungsform, bei der die Logikmittel derart mit den Projektionsmitteln zusammenwirkend ausgebildet sind, dass die Projektionsmittel ein Auswahlmenü auf das Objekt projizieren und die Logikmittel anhand der Sensorinformationen erkennen, welchen Befehl der Anwender visuell, beispielsweise mittels eines Laserpointers ausgewählt hat.

In Weiterbildung der Erfindung ist mit Vorteil vorgesehen, dass die Logikmittel nicht nur zum Auswerten von Sensorinformationen ausgebildet sind, sondern auch steuernd auf die Projektionsmittel einwirken, insbesondere dergestalt, dass mit diesen situationsbezogene Informationen in Form von Lichtobjekten mittels der Projektionsmittel auf das beobachtete Objekt projiziert werden.

Von besonderem Vorteil ist eine Ausführungsform der Vorrichtung, bei der die Logikmittel derart mit den Projektionsmitteln zusammenwirken, dass die Logikmittel die Art und/oder Position der von den Projektionsmitteln ausgesendeten Lichtobjekte vorgeben, insbesondere in Abhängigkeit einer bestimmten Auswertungsaufgabe und/oder in Abhängigkeit eines Auswertungszwischenergebnisses. So kann durch ein gezieltes Setzen von günstigen Referenzlichtpunkten eine extrem hohe Genauigkeit bei Vermessungs- und Selbstlokalisationsaufgaben erzielt werden. Zusätzlich oder alternativ kann die Vorrichtung derart ausgebildet werden, dass sie Lichtobjekte gezielt an, vorzugsweise automatisch bestimmte und/oder manuell vorgegebene, Punkte bzw. Bereiche des Objektes projiziert, insbesondere um diese genauer zu vermessen. Die Vorrichtung kann beispielsweise gezielt, vorzugsweise automatisch, bestimmte Lichtlinien und Muster aussenden, die besonders gut für die jeweilige Messaufgabe geeignet sind. Beispielsweise ist es für die Messung der Lage einer Raumkante vorteilhaft, eine die Kante kreuzende Lichtlinie auszusenden.

Unter einem Auswertungszwischenergebnis ist beispielsweise das Erkennen einer Objektstruktur, beispielsweise das Erkennen einer Kante oder einer Ecke zu verstehen, in die dann (nach Erkennen) ein bestimmtes Lichtobjekt, insbesondere zum erleichterten Vermessen oder zur erleichterten Positionsbestimmung, projiziert wird. Die Logikmittel erkennen die Objektstrukturen dabei bevorzugt mit geeigneter Bildverarbeitungssoftware.

Von besonderem Vorteil ist eine Ausführungsform der Vorrichtung, bei der die Logikmittel, vorzugsweise ein den Logikmitteln zugeordneter Speicher, mit digitalen Plandaten, beispielsweise Bauplandaten und/oder Leitungsplandaten, insbesondere über das Objekt versorgbar sind/ist. Dabei können die Plandaten bei der Auswertetätigkeit der Logikmittel von diesen berücksichtigt werden.

Von besonderem Vorteil ist eine Ausführungsform, bei der die Logikmittel derart ausgebildet sind, dass diese einen Abgleich der eingelesenen Plandaten und von Auswertungsergebnissen ermöglichen, beispielsweise um den Plan nachträglich der Realität anzupassen oder um Fehler zu erkennen.

Von besonderem Vorteil ist es dabei, wenn die Gemeinsamkeiten und/oder die Unterschiede zwischen dem Auswertungsergebnis (z.B. Vermessungsergebnis) und den Plandaten, bevorzugt als Lichtobjekt, insbesondere als Lichtmuster auf das Objekt projiziert werden.

Von besonderem Vorteil ist eine Ausführungsform, bei der die Logikmittel die Projektionsmittel derart ansteuern, dass sie ein Auswertungsergebnis, beispielsweise erkannte Objektstrukturen und/oder erzeugte Karten und/oder erzeugte dreidimensionale Modelle auf das Objekt projizieren. Dies erlaubt es dem Benutzer, das Erkannte zu überprüfen und ggf., insbesondere durch visuelle Interaktion, korrigierend einzugreifen.

Von besonderem Vorteil ist eine Ausführungsform der Vorrichtung, bei der die Projektionsmittel sichtbares Licht aussendend ausgebildet sind. Denkbar ist jedoch auch eine Ausführungsform, bei der die Projektionsmittel, zusätzlich oder alternativ zu sichtbarem Licht, Licht aus anderen Frequenzbereichen, beispielsweise aus dem Infrarotbereich aussendend ausgebildet sind. Um ein besonders genaues Messergebnis zu erzeugen, ist eine Ausführungsform der Projektionsmittel besonders bevorzugt, bei der diese gepulstes Licht aussendend ausgebildet sind.

Durch den Einsatz von gepulstem Licht kann durch Differenzbildung zweier Messungen der Einfluss von Umgebungslicht unterdrückt werden.

Von besonderem Vorteil ist eine Ausführungsform, bei der die Logikmittel auf Basis der Sensorinformationen Materialarten des Objektes und/oder Materialeigenschaften bestimmen können. Beispielsweise kann hierzu das Reflektionsverhalten des Objektes bzw. von Objektabschnitten ausgenutzt werden.

Um Daten mit der Vorrichtung austauschen zu können, beispielsweise um ein Auswertungsergebnis an einen externen PC zu übermitteln, oder um Plandaten an die Vorrichtung zu übermitteln, oder um den Zugriff auf externe Datenbanken zu ermöglichen, ist eine Ausführungsform bevorzugt, bei der die Vorrichtung mindestens eine Schnittstelle, beispielsweise eine Kabelschnittstelle oder eine Funkschnittstelle aufweist. Über die Schnittstelle können unter anderem Daten und/oder Befehle übermittelt werden.

Besonders bevorzugt ist eine Ausführungsform, bei der die Vorrichtung Ausrichtungsmittel aufweist, mit Hilfe derer die Vorrichtung, zumindest grob, horizontal oder vertikal ausrichtbar ist, hierzu kann beispielsweise mindestens eine Libelle und/oder mindestens ein Lot und/oder mindestens ein Kompass vorgesehen werden.

Von besonderem Vorteil ist eine Ausführungsform, bei der die Sensormittel und die Projektionsmittel in einem gemeinsamen Gehäuse angeordnet sind, vorzugsweise dergestalt, dass sie eine feste Ortsbeziehung zueinander aufweisen. Zusätzlich oder alternativ können die Sensormittel und die Projektionsmittel an einer gemeinsamen Trägeranordnung zum gemeinsamen Transportieren der Sensormittel und der Projektionsmittel angeordnet sein.

Im Folgenden werden einige Anwendungsbeispiele der zuvor beschriebenen Vorrichtung erläutert, wobei die Vorrichtung je nach Ausführungsbeispiel unterschiedliche Merkmalskombinationen der zuvor erläuterten Merkmale aufweisen kann/muss.
1. Mit Hilfe der Projektionsmittel kann auf das Objekt, beispielsweise einen Boden und/oder eine Wand ein Fliesenverlegeplan als Lichtmuster oder Lichtbild projiziert werden, wobei beispielsweise die Fliesenfugen durch projizierte Lichtlinien dargestellt werden. Das projizierte Lichtobjekt (Verlegeplan) hilft dabei dem Fliesenleger bei der Planung oder um seinen Kunden an der Baustelle darzulegen, wie eine bestimmte Fliesengröße und eine diagonale oder wandparallele Verlegung später im Raum wirken werden. Darüber hinaus ermöglicht eine derartige Ausführungsform dem Fliesenleger die Arbeit, die Fliesen ohne weitere Hilfsmittel korrekt zu positionieren und/oder um auf einer Fliese anzuzeichnen, wo diese geschnitten werden muss. Der Verlegeplan wird vor der Projektion den Logikmitteln, bevorzugt als Plandatensatz, zur Verfügung gestellt, wobei die Übermittlung beispielsweise über Kabel oder Funk erfolgen kann.
2. Mit einer Sensormittel aufweisenden Vorrichtung ist es alternativ möglich, eine zweidimensionale Karte oder ein dreidimensionales Modell von bereits verlegten Fliesen zu erzeugen, um die Kartendaten bzw. Modelldaten beispielsweise in einen Bauplan zu übernehmen. Hierzu können die Fliesenfugen anhand ihrer räumlichen Vertiefung oder anhand ihrer Farbgebung oder anhand ihrer unterschiedlichen Reflektivität von den Fliesen selbst mit Hilfe der Logikinformationen auf Basis der Sensorinformationen unterschieden werden. Auf verdeckte Fliesen und/oder Fugen kann beispielsweise von den Logikmitteln durch Interpolation geschlossen werden.
3. Auf Wände, Decken und/oder Böden können Sollpositionen von Leitungen für Strom, Wasser, Abwasser, Gas, Antennen und/oder sonstige Signale, Leerrohre, usw. projiziert werden. Dabei werden diese Positionsdaten zuvor den Logikmitteln, bevorzugt als Plandaten, zur Verfügung gestellt. Der Handwerker, beispielsweise ein Elektriker kann mit Hilfe der Lichtprojektion beispielsweise Wandschlitze und/oder Wand- und/oder Deckendurchbrüche für Leitungen, etc. selbst an der richtigen Position anbringen. Auch bei der Festlegung der Lage von Befestigungselementen für die genannten Leitungen (z.B. Rohrschellen) kann die Lichtprojektion hilfreich sein.
4. Auch ist es dem Architekten nachträglich möglich, die Arbeit eines Handwerkers, beispielsweise eines Elektrikers zu kontrollieren, indem er die Soll-Lage/SollPosition von Objektstrukturen, beispielsweise Leitungen, aus einem Bauplan auf eine Decke und/oder einen Boden und/oder eine Wand projiziert und selbst visuell vergleicht, ob sich Fehler bzw. Übereinstimmungen mit der tatsächlichen Position finden lassen. Zusätzlich oder alternativ können die Logikmittel derart ausgebildet sein, dass ein derartiger Vergleich automatisch vorgenommen und das Vergleichsergebnis durch eine entsprechende Projektion visualisiert wird.
5. Ebenso ist es möglich, bei nicht vorhandenem Leitungsplan, diesen mit der Vorrichtung automatisch zu generieren, indem die Logikmittel, beispielsweise mit Methoden der Bildverarbeitung, dem Verlauf einer tatsächlich vorhandenen Leitung folgen und dabei einen Plan als Auswertungsergebnis erstellen. Ein derartiger korrekter Leitungsplan kann insbesondere dann hilfreich sein, wenn die Leitungen erst einmal unter dem Verputz und/oder Wandverkleidungen verschwunden sind. Bei dem beschriebenen Beispiel, sowie bei dem nachfolgenden Beispiel ist es vorteilhaft, wenn der Benutzer mit dem System interagiert, insbesondere um diesem Informationen mitzuteilen, um welche Leitung es sich handelt, also beispielsweise Informationen darüber wie Leitungen verbunden sind, welche Funktion eine Leitung hat, oder welche Nummer sie hat oder haben soll.
6. Bei Aufgaben, wie die Erfassung von Leitungen, ist es möglich, dass der Anwender, insbesondere visuell, mit der Vorrichtung interagiert. Beispielsweise kann die Vorrichtung versuchen, den Verlauf einer Leitung selbstständig zu finden und ein derartiges Auswertungsergebnis durch Projektion anzuzeigen. Stellt der Anwender dabei Abweichungen oder Fehler fest, kann er korrigierend eingreifen. Beispielsweise kann er dazu mit einem Laserpointer auf die projizierte Linie zeigen und diese, vergleichbar mit einer Computermaus, "anfassen" und gegebenenfalls interaktiv verschieben.
7. Sind zu einem späteren Zeitpunkt die Wände verputzt und gegebenenfalls tapeziert oder bemalt, so ist die Projektion der Leitungen sehr hilfreich, um festzustellen, wo ein Bohren oder das Einschlagen von Nägeln (un)zulässig ist oder wo ein Rohr verläuft, das einen Rohrbruch hat, oder wo ein Kabel verläuft, das ausgetauscht werden muss, usw.
8. Gleiches wie für Stromleitungen gilt selbstverständlich auch für Unterputz-Verteilerdosen, elektrische Schalter und Steckdosen, Wasseranschlüsse und andere Elemente, deren Position mit Hilfe der Vorrichtung, insbesondere durch eine geeignete Ausbildung der Logikmittel festgestellt und/oder mit Hilfe von Projektionsmitteln angezeigt werden kann.
9. Ähnlich wie bei dem zuvor erläuterten Fliesenbeispiel, kann auch für Tapeten bestimmt und angezeigt werden, wie diese aufzukleben sind. Die Projektion hilft beim ordentlichen Ausrichten und zeigt auch vorab an, wo wie viel Verschnitt entsteht.
10. Ähnliches wie bei Fliesen und Tapeten gilt analog auch für Holzvertäfelungen auf Wänden und Decken sowie für Parkett- oder Laminat-Verlegung, insbesondere auf Böden.
11. Überall dort, wo Zuschnitte erforderlich sind, kann das Gerät diese vorab berechnen und die vom Handwerker benötigten Informationen z.B. als Zahlen oder Zeichen oder Symbole beispielsweise auf die spätere Position der entsprechenden Fliese/des Brettes, der Tapetenbahn, der Leitung, o.ä. projizieren. Die Zuschnitthilfe kann auch an eine andere Stelle projiziert werden, beispielsweise unmittelbar auf das Bauteil am Zuschnittort, oder auf eine Fläche am Zuschnittort, oder an eine Position, an die eine Säge o. ä. zu verschieben bzw. zu positionieren ist. Auf diese Weise kann die Fliese, der Teppich oder das Brett zugeschnitten werden, ohne dass es erforderlich wäre nochmals nachzumessen oder anzeichnen zu müssen. Darüber hinaus können Zuschnittdaten von dem Gerät unmittelbar an ein Zuschnittgerät übertragen werden, so dass das Zuschnittgerät, insbesondere eine Säge beispielsweise einen Anschlag automatisch einstellen kann.
12. Wenn unterschiedliche Bauteile anzubringen sind (z.B. Fliesen verschiedener Farbe/Material/Größe oder Unterputzdosen verschiedener Tiefe/Durchmesser, oder Schrauben verschiedener Durchmesser/Länge, usw.) so kann das Gerät derartige Informationen als Lichtobjekte, beispielsweise als Text oder Zahlen, an die jeweilige Stelle des Objektes projizieren.
13. Die Vorrichtung kann den Anwender beispielsweise durch eine geeignete Ausbildung der Logikmittel auch darauf aufmerksam machen, dass Fehler am Entstehen sind oder entstanden sind. Beispielsweise, wenn die zu verlegende Fliese gelb sein sollte und der Fliesenleger versehentlich stattdessen eine grüne Fliese gegriffen hat, so kann eine Farbkamera diesen Fehler erfassen und die Logikmittel können, insbesondere durch eine geeignete Bildverarbeitungssoftware, den Fehler erkennen und, beispielsweise durch geeignete Ausgabemittel wie beispielsweise einen Lautsprecher oder durch eine geeignete Ansteuerung der Projektion den Anwender benachrichtigen.
14. Die Vorrichtung kann auch Hilfslinien projizieren, beispielsweise ein metrisches und zu einer Wand und/oder Decke paralleles Raster, oder eine Linie in bestimmter Höhe, in der beispielsweise mehrere Nägel eingeschlagen werden sollen.
15. Die Vorrichtung kann auch durch eine geeignete Ausbildung der Logikmittel Längen abmessen, z.B. eine Länge von Wand zu Wand oder die Länge eines zu verlegenden Kabels und solche Messwerte als Auswertungsergebnis mit Hilfe der Projektionsmittel anzeigen. Zusätzlich oder alternativ kann auch ein Display zum Anzeigen von Auswertungsergebnissen vorgesehen werden. Für derartige Messaufgaben ist es sinnvoll, wenn der Anwender, wie bereits zuvor erläutert, mit der Vorrichtung in Interaktion treten kann, beispielsweise um anzugeben, was vermessen werden soll.
16. Ebenso ist das Vermessen von Flächen möglich, um z.B. den Bedarf an Putz, Farbe, Fliesen, Tapeten, Teppichen, Parkettbrettern, Laminatbrettern, Paneelen, Folien, Unterspannbahnen usw. bestimmen zu können.
17. Ebenso ist das Bestimmen von Volumina möglich, beispielsweise um zu ermitteln, wie viel Wasser ein ungewöhnlich geformter Swimmingpool fasst.
18. Ebenso ist das Bestimmen von Winkeln möglich, beispielsweise eines Winkels zwischen zwei Fachwerkbalken (Objektstruktur).
19. Die Vorrichtung kann auch beispielsweise einen Maler unterstützen, der mehrfarbige Bemalungen anfertigen soll, indem die Projektionsmittel beispielsweise Linien projizieren, an denen die Farbkanten liegen sollen. Beispielsweise ist es denkbar, dass die Vorrichtung den Umriss einer Bordüre projiziert, die der Maler so ohne weitere Hilfsmittel mit dem Pinsel anzeichnen kann. Entsprechende Daten können den Logikmitteln über eine geeignete Schnittstelle zugeführt werden.
20. Die Vorrichtung kann auch sonstige Vorlagen und "Kunstwerke" zum Nachmalen an die Wand projizieren, beispielsweise Farbflächenkonturbilder.
21. Die Vorrichtung kann auch die Oberflächenkrümmung von Wänden, Decken und Böden oder von Objektstrukturen bestimmen. Mit den ermittelten Informationen (Auswertungszwischenergebnis) über diese Oberflächenkrümmung ist es der Vorrichtung in der Folge möglich, notwendige Korrekturen (Auswertungsergebnis) zu berechnen, so dass es anschließend auf die gekrümmte Wand Linien projizieren kann, die in einer bestimmten (meist waagerechten) Ebene liegen sollen (also aus dieser Ebene heraus betrachtet wie Geraden aussehen), selbst wenn sich die Vorrichtung nicht in dieser Ebene befindet.
22. Häufig kommt es auch vor, dass eine unebene Decke und/oder Wand und/oder Boden im Rahmen einer Verkleidung, beispielsweise mit Gipskartonplatten, begradigt werden soll. Diese Aufgabe perfekt auszuführen ist beliebig schwierig, da der Handwerker mit seinen Messwerkzeugen (typischerweise Richtlatte und Maßstab) immer nur entlang einer Linie (der Richtlatte) messen kann. Die Vorrichtung hat in einer derartigen Situation den entscheidenden Vorteil, dass diese bei geeigneter Ausbildung der Logikmittel für die ganze Decke/Wand/Boden die Oberflächenkrümmung bestimmen kann. Somit kann es dann auch für jeden Punkt der Decke angeben, wie viel an jedem Befestigungspunkt eine Unterlattung zu unterlegen ist, damit nach der Verkleidung eine perfekt ebene Fläche entsteht. Das Gerät hat somit die Funktion einer 2-dimensionalen Richtlatte.
23. Mit der Vorrichtung ist es ferner möglich anzuzeigen, wo Durchbrüche vorzunehmen sind. Ein typischer Anwendungsfall ist der nachträgliche Einbau von Dachfenstern in Dachschrägen. Hier kann vorab, beispielsweise unter Verwendung eines vom Hersteller des Dachfensters elektronisch bereitgestellten Bemaßungsplans, auf die Dachschräge projiziert werden, wo diese innen aufgeschnitten werden muss. Dabei kann die beispielsweise aus dem Bauplan (Plandaten) eines Hauses bekannte Lage von Dachbalken mitberücksichtigt oder wenigstens angezeigt werden. Analoges gilt für den Einbau von Türen und das Einmessen von Wanddurchbrüchen.
24. Die Vorrichtung kann auch bei entsprechender Ausbildung der Logikmittel bei der Positionierung von Elementen der Raumgestaltungen hilfreich sein. Beispielsweise kann sich mit Hilfe der Vorrichtung vorab ein Bild davon verschafft werden, wie eine Reihe von Bildern/Bilderrahmen im montierten Zustand im Raum wirkt und/oder auf welcher Höhe und/oder in welchem Abstand sie angebracht werden sollen. Dazu werden, beispielsweise die Umrisse der Bilder als Lichtobjekte an eine Wand projiziert, oder je nach Ausgestaltung der Projektionsmittel, sogar Fotos der aufzuhängenden Bilder auf die entsprechend Wandstellen geworfen.
25. Ein Planer für Bildgalerien oder Museen kann seine Planungsinformationen als Plandaten an den Anwender des Gerätes weitergeben. Dieser erhält eindeutige und genaue Anweisungen, welches Kunstwerk wo aufzuhängen/aufzustellen ist. Sogar die zu einem Bild gehörenden Textinformationen können mit Hilfe der Projektionsmittel auf Wände projiziert werden, damit Fehler beim Aufbau so gut wie ausgeschlossen sind.
26. Ähnlich wie beim Aufhängen von Bildern kann die Vorrichtung auch bei der Inneneinrichtung nützliche Dienste verrichten und beispielsweise beim Planen und/oder Aufstellen von Möbeln helfen und/oder beim Planen und/oder Anbringen von Fensterbehängen. Die Maße der Einrichtungsgegenstände werden dazu entweder elektronisch aus Plandaten bereitgestellt oder vor Ort mit Hilfe der Vorrichtung vermessen.
27. Bei einem Umzug kann mit Hilfe der Vorrichtung vorab geklärt werden, ob ein großes Möbelstück im zusammengebauten Zustand durch ein Treppenhaus transportiert werden kann. Hierzu muss die Vorrichtung vorab das Treppenhaus und das Möbelstück vermessen und/oder Abmessungsdaten können auf andere Weise, beispielsweise eine Tastatur eingepflegt werden. Gegebenenfalls kann die Vorrichtung auch aufgrund der Maßverhältnisse Anweisungen berechnen, wie das Möbelstück kollisionsfrei durch das Treppenhaus bewegt werden muss. Das Gerät (Vorrichtung) kann nach Vermessen des Treppenhauses errechnen, welche Maximalgrößen an Objekten, insbesondere Quadern, hindurchpassen, damit das Umzugsunternehmen entscheiden kann, ob der Einsatz eines Lastenaufzugs notwendig ist.
28. Bei der Anbringung von Bauelementen und sonstigen Gegenständen, beispielsweise dem Aufhängen eines Bilderrahmens, eines Hängeschrankes, einer Lampe, eines Kleiderhakens, etc. kann die Vorrichtung die Befestigungspunkte an die Wand und/oder den Boden und/oder die Decke projizieren, an denen beispielsweise Dübel gesetzt oder Nägel eingeschlagen werden müssen. Die relative Lage der Befestigungspunkte zueinander kann beispielsweise aus einer Datenbank bekannt sein oder weil der Anwender das zu befestigende Teil vorher der Vorrichtung präsentiert hat und die Vorrichtung das Teil vermessen und durch geeignete Ausbildung der Logikmittel der Befestigungspunkte lokalisiert hat. Um die automatische Erfassung der Befestigungspunkte zu erleichtern, können diese optional durch Marker gekennzeichnet sein, die bereits vom Hersteller oder nachträglich vom Anwender auf das zu vermessende Teil aufgedruckt bzw. aufgeklebt wurden.

In einer einfachen Ausführungsform können die Projektionsmittel zwei rotierende Linienlaserprojektionseinheiten umfassen. Eine Digitalkamera (Sensormittel) ermittelt dabei bevorzugt Sensorinformationen, die mit Hilfe der Logikmittel ausgewertet werden, wobei die Logikmittel anhand der Sensorinformationen vertikale und horizontale Bezugslinien, beispielsweise die Raumkanten einer Wand erkennt und synchron die Hell-/Dunkeltastung der Laserprojektionseinheiten ansteuert. Zur metrischen Kalibrierung einer derartigen, einfachen Vorrichtung können parallele, horizontale und vertikale Linienpaare mit bekannter Winkeldifferenz auf das Objekt projiziert werden, wodurch zunächst das Lot und anschließend der Abstand zur betrachteten Wand ermittelt werden kann. Die mechanischen Linienlaserprojektionseinheiten können durch drehzahlstabilisierte (geregelte) Gleichstrommaschinen mit großer Getriebeübersetzung realisiert werden, wobei die aktuelle Position der Linienlaserpositionseinheiten beispielsweise durch Zeitmessung bezüglich einer Referenzkante mit hoher Auflösung bestimmt werden kann. Zusätzlich oder alternativ zu Linienlaserprojektionseinheiten kann eine Projektionseinheit mit einer verstellbaren Mikrospiegelanordnung realisiert werden. Auch ist der Einsatz von Beamern, vorzugsweise mit einer algorithmischen Rektifizierung des projizierten Bildes realisierbar.

Folgende mögliche Genauigkeitsgrenzen können auf einfache Weise realisiert werden:
Projektion vertikaler Hilfslinien auf einen Arbeitsbereich von 10 m Länge. Die geforderte Auflösung in einem Zentralbereich beträgt dabei bevorzugt 1 mm. Der Abstand der Vorrichtung zur Wand beträgt 5 mm, d.h. die Wand wird mit einem Winkelsegment von 90° vollständig überstrichen. Hieraus folgt eine Winkelauflösung von etwa 0,01°. Bei einer Wiederholrate der Bildprojektion von 10 Hz wird der Arbeitsbereich innerhalb von 25 ms vollständig überschritten, woraus eine Auflösung der Zeitmessung von 2,5 µs resultiert. Die Anforderung ist beispielsweise mit einem handelsüblichen 16 Bit-Zähler bei einer Taktrate von lediglich 400 kHz realisierbar.

### Kurze Beschreibung der Zeichnungen

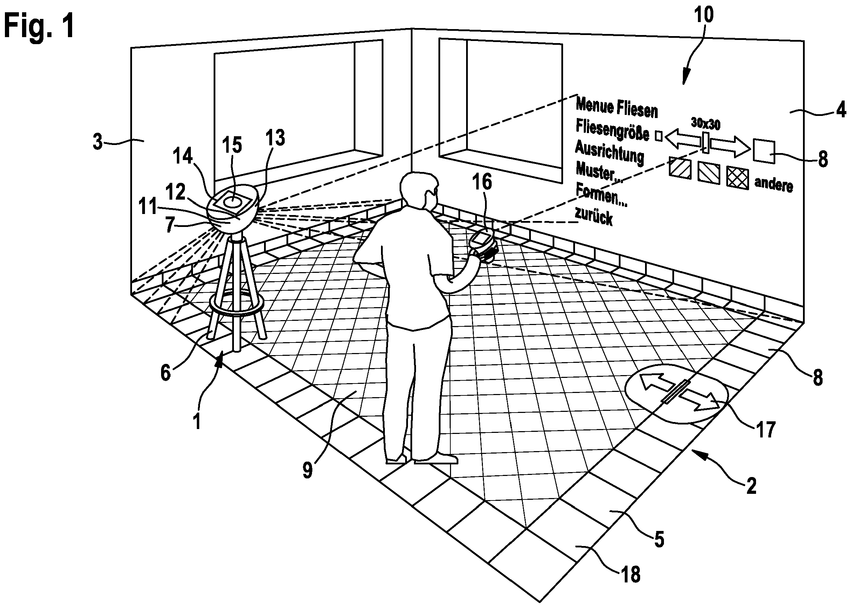

Weitere Vorteile, Merkmale und Einzelheiten der Erfindung ergeben sich aus der nachfolgenden Beschreibung eines bevorzugten Ausführungsbeispiels sowie anhand der Zeichnungen. Diese zeigen in der einzigen Fig. 1 eine Vorrichtung in einem Raum.

### Ausführungsformen der Erfindung

In Fig. 1 ist eine Vorrichtung 1 gezeigt, diese ist in einem als Raum ausgebildeten Objekt 2 angeordnet, wobei von dem Objekt 2, zwei rechtwinklig zueinander angeordnete Wände 3, 4 und ein Boden 5 gezeigt ist, auf dem die Vorrichtung 1 mittels eines Stativs 6 positioniert ist. In dem gezeigten Ausführungsbeispiel bilden die Wände 3, 4 zusammen mit dem Boden 5 das dreidimensionale Objekt 2, auf das mit geeigneten Projektionsmitteln 7 Lichtobjekte 8 projizierbar sind.

In dem gezeigten Ausführungsbeispiel handelt es sich bei den Lichtobjekten 8 zum einen um einen auf den Boden 5 projizierten Verlegeplan 9 für Fliesen sowie zum anderen um ein an die Wand 4 projiziertes Auswahlmenü 10. Die Vorrichtung 1 erfasst mit geeigneten, eine Digitalkamera umfassenden, Sensormitteln 11 die Wände 3, 4 und den Boden 5 zusammen mit den projizierten Lichtobjekten 8. Logikmittel 12 erkennen Raumkanten und Ecken und vermessen die Wände 3, 4 und den Boden 5, wobei die Logikmittel anhand dieses Auswertungsergebnisses die Projektionsmittel derart ansteuern, dass der Verlegeplan 9 und das Auswahlmenü 10 korrekt positioniert werden. Wird die Vorrichtung 1 versehentlich angestoßen oder absichtlich an einer anderen Stelle im Raum 2 aufgestellt, so erkennt die Vorrichtung 1 durch ein geeignetes Zusammenwirken der Sensormittel 11 mit den Logikmitteln 12 diese Abweichung und richtet die Projektion durch eine geeignete Ansteuerung der Projektionsmittel 7 neu aus.

Die Projektionsmittel 7 und die Sensormittel 11 sind bei dem gezeigten Ausführungsbeispiel weitwinklig ausgelegt und in einem transparenten, halbkugelförmigen Gehäuse 13 untergebracht. Auf einer Schnittseite 14 des halbkugelförmigen Gehäuses ist ein Touch-Screen 15 zu erkennen.

Bei dem gezeigten Ausführungsbeispiel ist die Vorrichtung derart ausgebildet, dass die Logikmittel automatisch erkennen, dass sich im Raum 2 eine helle Wand 4 befindet. Die Logikmittel 12 wählen diese Wand 4 automatisch aus, um das Auswahlmenü 10 und gegebenenfalls weitere Informationen darzustellen. Der Anwender interagiert visuell mit dem System, indem er mit Hilfe eines Laserpointers 16 beispielsweise die Größen der Fliesen im Auswahlmenü 10 einstellt. Ein zum Auswahlmenü 10 gehörender, auf den Boden 5 projizierter Doppelpfeil 17 mit Schieber deutet an, dass hier die Breite der Randfliesen 18 (Lichtobjekt) variiert werden kann.

Der Laserpointer 16 ist in dem gezeigten Ausführungsbeispiel gleichzeitig als Fernbedienung mit einem Display ausgeführt, um die Vorrichtung 1 fernsteuern zu können. Bei Bedarf kann in den Laserpointer 16 auch die Funktionalität einer Laser- Entfernungsmessvorrichtung integriert werden.

## Patentansprüche

1. Vorrichtung mit Projektionsmittel (7) zum Projizieren von Lichtobjekten (8) auf ein zweidimensionales oder dreidimensionales Objekt (2),
**dadurch gekennzeichnet,**
**dass** die Sensormittel (11) signalleitend mit Logikmitteln (12) zum Auswerten der Sensorinformationen verbunden sind, wobei die Logikmittel (12) zum zumindest abschnittsweisen Vermessen des Objektes (2), wie Objektstrukturen, ausgebildet sind und anhand des erfassten, reflektierten Lichtes der Lichtobjekte (8) Raum- und/oder Abmessungsinformationen ermitteln und durch die Projektionsmittel (7)auf das Objekt projizieren können, wobei die Logikmittel (12) ferner zum Erkennen und Ausführen von visuellen Befehlen des Benutzers unter Berücksichtigung eines mit den Projektionsmitteln (7) auf das Objekt (2) projizierten Auswahlmenüs (10) ausgebildet sind.

2. Vorrichtung nach Anspruch 1, **dadurch gekennzeichnet, dass** die Projektiönsmittel (7) zum Projizieren von als Lichtpunkte und/oder Lichtlinien und/oder Lichtmuster und/oder Lichtschriften und/oder Lichtbildern ausgebildeten Lichtobjekten (8) ausgebildet sind.

3. Vorrichtung nach einem der Ansprüche 1 oder 2, **dadurch gekennzeichnet, dass** die Sensormittel (11) mindestens eine Kamera, insbesondere eine Digitalkamera, umfassen.

4. Vorrichtung nach einem der vorhergehenden Ansprüche,
**dadurch gekennzeichnet,**
**dass** die Logikmittel (12) Objektstrukturen, wie Kanten, Erhebungen, Vertiefungen, Stromleitungen, Wasserleitungen, Gasleitungen, Leerrohre, Signalleitungen, faseroptische Leitungen o. dgl. erkennend ausgebildet sind.

5. Vorrichtung nach einem der vorhergehenden Ansprüche,
**dadurch gekennzeichnet,**
**dass** die Logikmittel (12) zum Bestimmen der Position der Vorrichtung (1) relativ zu dem Objekt (2), insbesondere zu bestimmten Objektbereichen, ausgebildet sind.

6. Vorrichtung nach einem der vorhergehenden Ansprüche,
**dadurch gekennzeichnet,**
**dass** die Logikmittel (12) zum Erzeugen einer zweidimensionalen Karte und/oder eines dreidimensionalen Modells des Objektes (2), vorzugsweise inklusive von Objektstrukturen, ausgebildet sind.

7. Vorrichtung nach einem der vorhergehenden Ansprüche,
**dadurch gekennzeichnet,**
**dass** die Logikmittel (12) die Projektionsmittel (7) ansteuernd ausgebildet sind.

8. Vorrichtung nach Anspruch 7,
**dadurch gekennzeichnet,**
**dass** die Logikmittel (12) die Projektionsmittel (7) derart ansteuernd ausgebildet sind, dass die Logikmittel (12) die Art und/oder die Position der von den Projektionsmitteln (7) ausgesendeten Lichtobjekte (8) vorgeben, insbesondere in Abhängigkeit einer Auswertungsaufgabe und/oder in Abhängigkeit eines Auswertungszwischenergebnisses.

9. Vorrichtung nach einem der vorhergehenden Ansprüchen,
**dadurch gekennzeichnet,**
**dass** die Logikmittel (12) mit Plandaten, insbesondere über das Objekt (2), versorgbar sind.

10. Vorrichtung nach Anspruch 9,
**dadurch gekennzeichnet,**
**dass** die Logikmittel (12) die Projektionsmittel (7) derart ansteuern, dass diese die Plandaten als Lichtobjekte (8) auf das Objekt (2) projizieren.

11. Vorrichtung nach einem der Ansprüche 9 oder 10,
**dadurch gekennzeichnet,**
**dass** die Logikmittel (12) das Auswertungsergebnis mit den Plandaten vergleichend ausgebildet sind.

12. Vorrichtung nach Anspruch 11,
**dadurch gekennzeichnet,**
**dass** die Logikmittel (12) die Projektionsmittel (7) derart ansteuernd ausgebildet sind, dass diese Gemeinsamkeiten und/oder Unterschiede zwischen dem Auswertungsergebnis als Lichtobjekte (8) auf das Objekt (2) projizieren.

13. Vorrichtung nach einem der Ansprüche 9 bis 12,
**dadurch gekennzeichnet,**
**dass** die Logikmittel (12) die Projektionsmittel (7) derart ansteuren, dass diese ein Auswertungsergebnis, insbesondere erkannte Objektstrukturen und/oder erzeugte Karten und/oder erzeugte Modelle, auf das Objekt (2) projizieren.

14. Vorrichtung nach einem der vorhergehenden Ansprüche,
**dadurch gekennzeichnet,**
**dass** die Projektionsmittel (7) sichtbares, vorzugsweise gepulstes, Licht aussendend ausgebildet sind.

15. Vorrichtung nach einem der vorhergehenden Ansprüche,
**dadurch gekennzeichnet,**
**dass** die Logikmittel (12) auf Basis der Sensorinformationen, wie Reflektionseigenschaften, Materialarten und/oder Materialeigenschaften bestimmend ausgebildet sind.

16. Vorrichtung nach einem der vorhergehenden Ansprüche,
**dadurch gekennzeichnet,**
**dass** die Vorrichtung (1) mindestens eine Schnittstelle zum Datenaustausch aufweist.

17. Vorrichtung nach einem der vorhergehenden Ansprüche,
**dadurch gekennzeichnet,**
**dass** Ausrichtungsmittel zum, insbesondere horizontalen und/oder vertikalen, Ausrichten der Vorrichtung (1) vorgesehen sind.

18. Vorrichtung nach einem der vorhergehenden Ansprüche,
**dadurch gekennzeichnet,**
**dass** die Sensormittel (11) und die Projektionsmittel (7) in einem gemeinsamen Gehäuse (13) und/oder an einer gemeinsamen Trägeranordnung angeordnet sind.

19. Vorrichtung nach einem der vorhergehenden Ansprüche,
**dadurch gekennzeichnet,**
**dass** von den Logikmitteln (12) Zuschnittinformationen an eine Zuschnittvorrichtung, insbesondere eine Säge, insbesondere zu Zwecken des automatisierten Einstellens eines Anschlags, übermittelbar sind.

## Claims

1. Apparatus having projection means (7) for projecting light objects (8) onto a two-dimensional or three-dimensional object (2),
**characterized**
**in that** the sensor means (11) are signal-conductively connected to logic means (12) for evaluating the sensor information, wherein the logic means (12) are configured for at least partially measuring the object (2), such as object structures, and can ascertain, on the basis of the captured, reflected light of the light object (8), spatial and/or dimensional information and project it onto the object by way of the projection means (7), wherein the logic means (12) are furthermore configured for recognizing and performing visual instructions from the user while taking into consideration a selection menu (10) that is projected onto the object (2) using the projection means (7).

2. Apparatus according to Claim 1,
**characterized**
**in that** the projection means (7) are configured for projecting light objects (8) in the form of light dots and/or light lines and/or light patterns and/or light text and/or light images.

3. Apparatus according to either of Claims 1 and 2,
**characterized**
**in that** the sensor means (11) comprise at least one camera, in particular a digital camera.

4. Apparatus according to one of the preceding claims,
**characterized**
**in that** the logic means (12) are configured so that they recognize object structures, such as edges, elevations, recesses, electric lines, water lines, gas lines, empty conduits, signal lines, fibre-optic lines or the like.

5. Apparatus according to one of the preceding claims,
**characterized**
**in that** the logic means (12) are configured for determining the position of the apparatus (1) relative to the object (2), in particular to specific object regions.

6. Apparatus according to one of the preceding claims,
**characterized**
**in that** the logic means (12) are configured for producing a two-dimensional map and/or a three-dimensional model of the object (2), preferably including object structures.

7. Apparatus according to one of the preceding claims,
**characterized**
**in that** the logic means (12) are configured such that they control the projection means (7).

8. Apparatus according to Claim 7,
**characterized**
**in that** the logic means (12) are configured such that they control the projection means (7) in a manner such that the logic means (12) specify the type and/or the position of the light objects (8) which are emitted by the projection means (7), in particular in dependence on an evaluation task and/or in dependence on an evaluation intermediate result.

9. Apparatus according to one of the preceding claims,
**characterized**
**in that** the logic means (12) are suppliable with planning data, in particular relating to the object (2).

10. Apparatus according to Claim 9,
**characterized**
**in that** the logic means (12) control the projection means (7) in a manner such that the latter project the planning data onto the object (2) in the form of light objects (8).

11. Apparatus according to either of Claims 9 and 10,
**characterized**
**in that** the logic means (12) are configured such that they compare the evaluation result with the planning data.

12. Apparatus according to Claim 11,
**characterized**
**in that** the logic means (12) are configured such that they control the projection means (7) in a manner such that the latter project commonalities and/or differences between the evaluation result onto the object (2) in the form of light objects (8).

13. Apparatus according to one of Claims 9 to 12,
**characterized**
**in that** the logic means (12) control the projection means (7) in a manner such that the latter project an evaluation result, in particular recognized object structures and/or produced maps and/or produced models, onto the object (2).

14. Apparatus according to one of the preceding claims,
**characterized**
**in that** the projection means (7) are configured such that they emit visible, preferably pulsed, light.

15. Apparatus according to one of the preceding claims,
**characterized**
**in that** the logic means (12) are configured such that they determine material types and/or material properties on the basis of the sensor information, such as reflection properties.

16. Apparatus according to one of the preceding claims,
**characterized**
**in that** the apparatus (1) has at least one interface for the purposes of data exchange.

17. Apparatus according to one of the preceding claims,
**characterized**
**in that** alignment means are provided for aligning the apparatus (1), in particular horizontally and/or vertically.

18. Apparatus according to one of the preceding claims,
**characterized**
**in that** the sensor means (11) and the projection means (7) are arranged in a common housing (13) and/or on a common carrier arrangement.

19. Apparatus according to one of the preceding claims,
**characterized**
**in that** cutting information is transmittable from the logic means (12) to a cutting apparatus, in particular a saw, in particular for the purpose of automatically setting a stop.

## Revendications

1. Dispositif comportant des moyens de projection (7) destinés à projeter des objets lumineux (8) sur un objet (2) bidimensionnel ou tridimensionnel, **caractérisé en ce que** les moyens détecteurs (11) sont reliés de manière conductrice de signaux à des moyens logiques (12) destinés à évaluer les informations de capteurs, dans lequel les moyens logiques (12) sont conçus pour mesurer l'objet (2) au moins par sections, par exemple des structures d'objets, et déterminent, sur la base de la lumière réfléchie et détectée de l'objet lumineux (8), des informations spatiales et/ou de dimensions et peuvent les projeter sur l'objet à l'aide des moyens de projection (7), dans lequel les moyens logiques (12) sont en outre conçus pour détecter et mettre en oeuvre des instructions visuelles de l'utilisateur en tenant compte d'un menu de sélection (10) projeté sur l'objet (2) à l'aide des moyens de projection (7).

2. Dispositif selon la revendication 1,
**caractérisé en ce que** les moyens de projection (7) sont conçus pour projeter des objets lumineux réalisés sous la forme de points lumineux et/ou de lignes lumineuses et/ou de motifs lumineux et/ou d'inscriptions lumineuses et/ou d'images lumineuses.

3. Dispositif selon l'une quelconque des revendications 1 ou 2,
**caractérisé en ce que** les moyens détecteurs (11) comprennent au moins une caméra, notamment une caméra numérique.

4. Dispositif selon l'une quelconque des revendications précédentes,
**caractérisé en ce que** les moyens logiques (12) sont réalisés sous la forme d'arêtes, de protubérances, de creux, de conducteurs de courant, de conduites d'eau, de conduites de gaz, de tubes creux, de lignes de signaux, de lignes à fibres optiques ou autres.

5. Dispositif selon l'une quelconque des revendications précédentes,
**caractérisé en ce que** les moyens logiques (12) sont réalisés de manière à déterminer la position du dispositif (1) par rapport à l'objet (2), notamment de manière à déterminer des zones de l'objet.

6. Dispositif selon l'une quelconque des revendications précédentes,
**caractérisé en ce que** les moyens logiques (12) sont conçus pour générer une carte bidimensionnelle et/ou un modèle tridimensionnel de l'objet (2), y compris de préférence des structures d'objet.

7. Dispositif selon l'une quelconque des revendications précédentes,
**caractérisé en ce que** les moyens logiques (12) sont conçus pour commander les moyens de projection (7).

8. Dispositif selon la revendication 7,
**caractérisé en ce que** les moyens logiques (12) sont conçus pour commander les moyens de projection (7) de manière à ce que les moyens logiques (12) prédéterminent le type et/ou la position des objets lumineux (8) émis par les moyens de projection (7) notamment en fonction d'une tâche d'évaluation et/ou en fonction d'un résultat d'évaluation.

9. Dispositif selon l'une quelconque des revendications précédentes,
**caractérisé en ce que** les moyens logiques (12) peuvent recevoir des données de plans, concernant notamment l'objet (2).

10. Dispositif selon la revendication 9,
**caractérisé en ce que** les moyens logiques (12) commandent les moyens de projection (7) de manière à ce qu'ils projettent sur l'objet (2) les données de plans sous la forme d'objets lumineux (8).

11. Dispositif selon l'une quelconque des revendications 9 ou 10,
**caractérisé en ce que** les moyens logiques (12) sont conçus pour comparer le résultat d'évaluation aux données de plans.

12. Dispositif selon la revendication 11, **caractérisé en ce que** les moyens logiques (12) commandent les moyens de projection (7) de manière à ce qu'ils projettent sur l'objet (2) les aspects communs et/ou les différences entre le résultat d'évaluation sous la forme d'objets lumineux (8).

13. Dispositif selon l'une quelconque des revendications 9 à 12,
**caractérisé en ce que** les moyens logiques (12) commandent les moyens de projection (7) de manière à ce qu'ils projettent sur l'objet (2) un résultat d'évaluation, notamment des structures d'objet reconnues et/ou des cartes générées et/ou des modèles générés.

14. Dispositif selon l'une quelconque des revendications précédentes,
**caractérisé en ce que** les moyens de projection (7) sont conçus pour émettre une lumière visible, de préférence pulsée.

15. Dispositif selon l'une quelconque des revendications précédentes,
**caractérisé en ce que** les moyens de projection (12) sont conçus pour déterminer, sur la base des informations de capteurs, des propriétés de réflexion, des types de matériaux et/ou des propriétés de matériaux.

16. Dispositif selon l'une quelconque des revendications précédentes,
**caractérisé en ce que** le dispositif (1) comporte au moins une interface d'échange de données.

17. Dispositif selon l'une quelconque des revendications précédentes,
**caractérisé en ce qu'**il est prévu des moyens d'orientation notamment destinés à orienter horizontalement et/ou verticalement le dispositif (1).

18. Dispositif selon l'une quelconque des revendications précédentes,
**caractérisé en ce que** les moyens détecteurs (11) et les moyens de projection (7) sont disposés dans un boîtier commun (13) et/ou sur un ensemble de support commun.

19. Dispositif selon l'une quelconque des revendications précédentes,
**caractérisé en ce que** des informations de découpe peuvent être transmises à un dispositif de découpe, notamment à une scie, en particulier dans le but de régler automatiquement une butée.
